# FASCICULE DE BREVET EUROPEEN

(11) **EP 0 578 559 B1**
(45) Date de publication et mention de la délivrance du brevet: **03.11.1999**
(21) Numéro de dépôt: 93401748.4
(22) Date de dépôt: 06.07.1993
(51) Int. Cl.: E03F 5/14, B01D 33/04, E02B 8/02

(54) **Chaîne sans fin de dégrillage et bras de filtrage pour la chaîne**
Endloser Kettenrechenreiniger und Filterarm für die Kette
Endless chain screen cleaner and filterarm for this chain

(30) Priorité: 08.07.1992 FR 9208464
(43) Date de publication de la demande: 12.01.1994
(73) Titulaire: ANDRITZ SPROUT-BAUER, 45071 Orleans Cedex 2 (FR)
(72) Inventeur: Louis, Jean-Michel, F-45000 Orléans (FR); Morel, Gilbert, F-45370 Mézières Lez Clery (FR)
(74) Mandataire: Bloch, Gérard

(56) Documents cités:
- DE-U- 8 709 897
- DE-U- 9 104 551
- US-A- 4 188 294

## Description

La présente invention concerne une chaîne sans fin de dégrillage, ou d'épuration mécanique, également appelée écran filtrant dont chaque maillon est constitué d'une rangée de bras de filtrage montés tourillonnants sur deux axes amont et aval décalés le long de la chaîne, chaque bras de filtrage présentant un bord d'attaque avant et étant prolongé par un avant-bras amont présentant un bord d'attaque, les avant-bras d'un maillon étant intercalés entre les bras du maillon adjacent amont et montés tourillonnants sur l'axe aval dudit maillon adjacent.

Un tel écran filtrant, agencé pour être entraîné en rotation autour de roues, ou "tourteaux", d'entraînement et de détour, est utilisé comme grille de filtration notamment pour l'épuration d'effluents industriels.

Les bras sont montés sur deux axes, solidaires par leurs extrémités de chaînes d'entraînement, pour éviter que, entre deux roues d'entraînement ou de détour, les bras ne pivotent, tout en permettant le pivotement relatif des bras de deux maillons adjacents autour des roues d'entraînement ou de détour.

On remarquera que les bras de la chaîne de dégrillage du document US.A.4188294 ne sont montés que sur un axe.

Les bords d'attaque avant des bras des maillons assurent un premier filtrage qui est complété par un second sur les bords d'attaque, en arrière des bords d'attaque des bras, des avant-bras des maillons adjacents aval.

Jusqu'ici les bords d'attaque des avant-bras étaient décalés vers l'arrière en considérant le sens d'arrivée des effluents, par rapport à ceux des bras. On voulait en effet probablement maintenir, entre le bord d'attaque d'un avant-bras de maillon et le bord d'attaque des deux bras latéraux du maillon adjacent, une ouverture de passage, ou une maille, secondaire de largeur suffisante tout en préservant, pour une raison de robustesse, une épaisseur de bras et d'avant-bras suffisante. En d'autres termes, on n'avait pas voulu choisir entre la largeur de maille secondaire et l'épaisseur de bras, l'une au profit de l'autre.

La demanderesse a constaté que, en fait, le problème, s'il avait été ainsi posé, ne l'avait pas été convenablement.

Une telle disposition est plutôt préjudiciable à un bon filtrage. En effet, l'espace ménagé entre deux bras voisins d'un même maillon constitue un canal d'accélération dans lequel les fibres, non arrêtées par les bords d'attaque des bras, ont tendance à s'orienter dans le sens du flux avec le risque, donc, de passer à travers les mailles secondaires formées entre les avant-bras arrière et les bras avant. Il en est naturellement de même pour les autres particules solides.

La présente invention vise donc à éviter cet inconvénient.

A cet effet, la présente invention concerne tout d'abord une chaîne sans fin de dégrillage, dont chaque maillon est constitué d'une rangée de bras de filtrage montés tourillonnants sur deux axes amont et aval décalés le long de la chaîne, chaque bras de filtrage présentant un bord d'attaque avant et étant prolongé par un avant-bras amont présentant un bord d'attaque, les avant-bras d'un maillon étant intercalés entre les bras du maillon adjacent amont et montés tourillonnants sur l'axe aval dudit maillon adjacent, caractérisé par le fait que le bord d'attaque de l'avant-bras de chaque bras de filtrage est sensiblement dans le prolongement rectiligne du bord d'attaque du bras.

Le mérite de la demanderesse est finalement de s'être rendu compte que la largeur des mailles pouvait parfaitement être déterminée au détriment de l'épaisseur des bras, sans pour autant diminuer la robustesse de la chaîne de dégrillage.

On remarquera que la chaîne de dégrillage du document DE-U-9104551 comporte des éléments de maillon dont les bras sont montés sur deux axes propres et ne comportent pas d'avant-bras, les déchets ne pouvant ainsi s'en échapper que par gravité.

L'invention concerne également un bras de filtrage pour la chaîne de dégrillage de l'invention, s'étendant entre deux oeillets de passage d'axe, présentant un bord d'attaque et prolongé, au delà d'un des deux oeillets, par un avant-bras, caractérisé par le fait que l'avant-bras présente un bord d'attaque sensiblement dans le prolongement rectiligne du bord d'attaque du bras.

Avantageusement, l'avant-bras est prolongé par un doigt avant de relevage des éléments solides arrêtés par le bras.

Avantageusement encore, l'avant-bras comporte un ergot, ou secteur, de guidage latéral du bras, pour le maintenir entre ceux du maillon adjacent lors de son pivotement autour des roues d'entraînement.

L'invention sera mieux comprise à l'aide de la description suivante, en référence au dessin annexé, sur lequel
- la figure 1 représente une vue schématique et partielle d'une chaîne de dégrillage de l'art antérieur ;
- la figure 2 représente une vue de profil de trois maillons de la chaîne de la figure 1 ;
- la figure 3 représente une partie de la vue en coupe selon la ligne III-III de la figure 2, à plus grande échelle ;
- la figure 4 représente une vue de profil de trois maillons de la chaîne de l'invention et
- la figure 5 représente une partie de la vue en coupe selon la ligne V-V de la figure 4, à plus grande échelle.

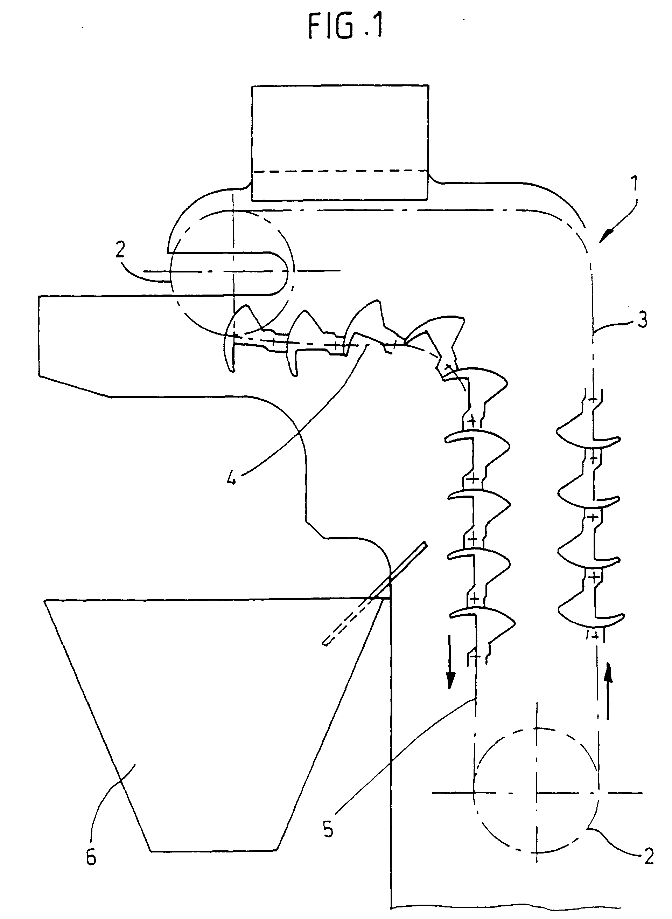

Un équipement de dégrillage, comme celui de l'art antérieur représenté schématiquement sur la figure 1, comporte un écran sous forme de chaîne sans fin 1, agencée pour être entraînée en rotation autour de roues d'entraînement et de détour 2. En continu, chaque maillon de la chaîne est entraîné sur un trajet avant de relevage 3, de bas en haut, avant d'être entraîné, et après détours, sur un trajet arrière de décharge 4 sensiblement horizontal, puis un trajet arrière 5 de descente, avant de rejoindre à nouveau, après détour, le trajet de relevage 3.

Les effluents à filter arrivent sur le trajet de relevage 3. Les matières solides en suspension arrêtées sur ce trajet sont relevées avant d'être déchargées, notamment par gravité, sur le trajet de décharge 4 s'étendant au-dessus d'une trémie de réception 6.

L'entraînement de l'écran filtrant est réalisé, de façon classique, par des chaînes d'entraînement sur lesquelles sont montés, par leurs deux extrémités, les axes des bras de filtrage dont il sera question ci-après et qui sont elles-mêmes montées sur les roues d'entraînement et de détour évoquées ci-dessus.

Chaque maillon de la chaîne 1 de la figure 1 est constitué d'une rangée de bras de filtrage 10 s'étendant entre deux oeillets 11, 12 de passage de deux axes aval 13 et amont 14, respectivement, chaque bras présentant un bord d'attaque avant 15 et étant prolongé, au-delà d'un 12 des deux oeillets, par un avant-bras amont 16 lui-même prolongé, d'un côté, par un doigt de relevage 17 et, de l'autre côté, par un secteur de guidage 18. Entre l'oeillet 12, séparant le bras 10 de son avant-bras 16, et le doigt de relevage 17, l'avant-bras 16 présente un bord d'attaque avant 19 qui est décalé vers l'arrière par rapport au bord d'attaque 15 du bras et, en l'occurrence, sensiblement dans le prolongement rectiligne du bord arrière 20 du bras 10.

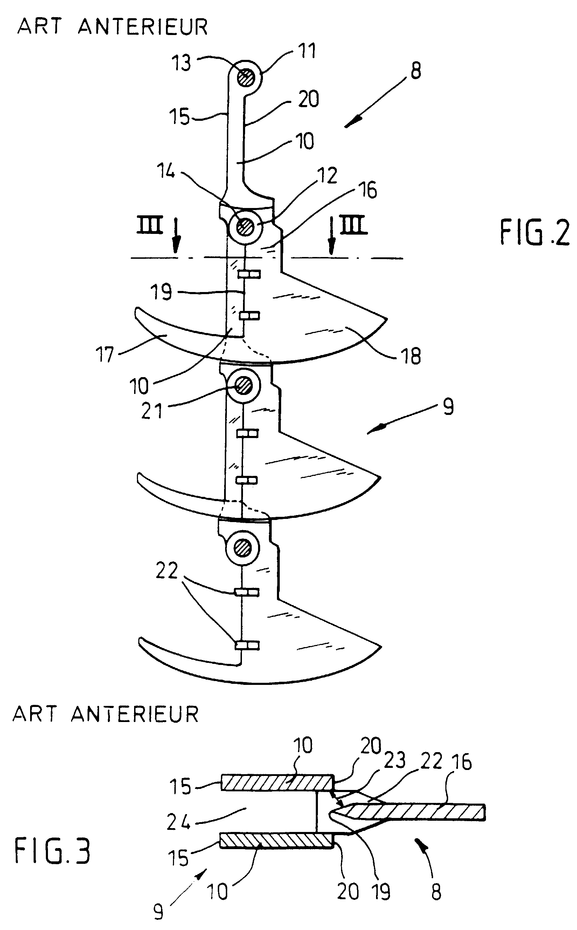

Les avant-bras 16 des bras 10 d'un maillon 8, montés tourillonnants sur l'axe 14, sont intercalés entre les bras 10 du maillon adjacent amont 9 montés tourillonnants sur l'axe 14, amont pour le maillon 8 et aval pour le maillon 9, et un axe 21, amont pour le maillon 9 (figure 2).

En considérant deux bras 10 voisins du maillon amont 9 et un avant-bras 16, du maillon aval 8, intercalé entre ces deux bras (figure 3), les bords d'attaque avant 15 des bras 10 assurent un premier filtrage. Ce filtrage est complété par un second filtrage, sur le bord d'attaque 19 de l'avant-bras 16, en arrière des bords d'attaque avant 15 des bras 10.

Les avant-bras 16 portent des entretoises 22 d'appui sur les bras, entre lesquels ils sont intercalés, et en saillie vers l'avant puisque les bords arrière 20 des bras et les bords d'attaque avant 19 des avant-bras sont sensiblement dans un même plan.

Les ouvertures de passage entre les bords d'attaque 19 des avant-bras 16 et les bords arrière 20 des bras 10 constituent des mailles de filtrage 23. L'espace ménagé entre deux bras 10 voisins d'un même maillon constitue un canal d'accélération 24.

Beaucoup de caractéristiques sont communes à la chaîne de filtrage de l'art antérieur et à celle de l'invention, donc aux bras 10 de l'art antérieur et à ceux de l'invention qui s'en distinguent toutefois par d'autres.

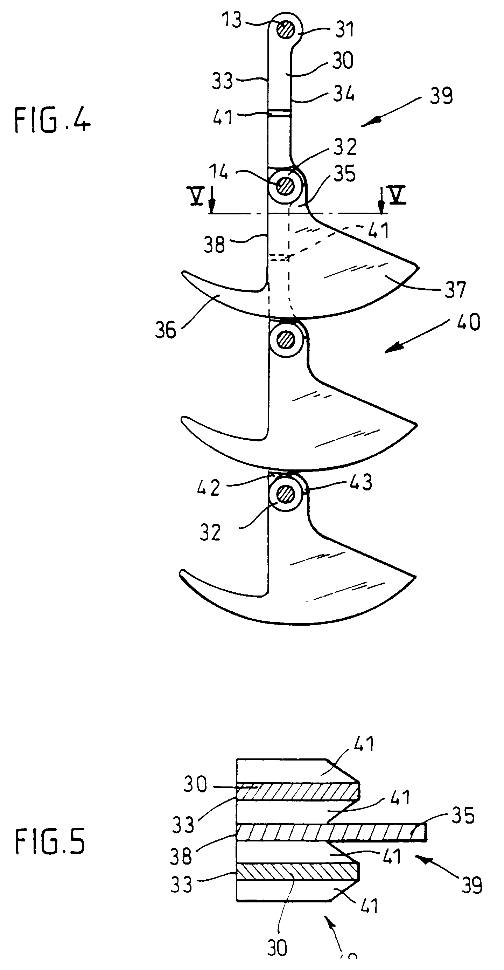

Les bras 30 de l'invention (figure 4) s'étendent aussi entre un oeillet aval 31 et un oeillet amont 32 pour tourillonner sur les axes 13 et 14, avec un bord d'attaque avant 33 et un bord arrière 34. Au-delà de l'oeillet amont 32, chaque bras 30 est prolongé par un avant-bras 35, lui-même encore prolongé, d'un côté, par un doigt de relevage 36 et, de l'autre côté, par un secteur de guidage 37 avec, entre l'oeillet amont 32 et le doigt 36, un bord d'attaque avant 38.

Mais, et contrairement aux bras et avant-bras de l'art antérieur, les bords d'attaque avant 33 d'un bras 30 et 38 d'un avant-bras 35 sont sensiblement dans le prolongement rectiligne l'un de l'autre.

Les bras 30 et avant-bras 35, de même épaisseur, sont moins épais que ceux de l'art antérieur.

Les bras 30 d'un maillon 40 portent des entretoises 41 d'appui contre les avant-bras 35 du maillon aval adjacent 39. Ces entretoises permettent un contrôle de la dimension des mailles.

Les oeillets amont, ou médians, 32, au-delà desquels s'étendent les avant-bras des bras 30, sont rehaussés, latéralement, de deux paires d'oreilles avant 42 et arrière 43 de réception des oeillets aval, ou d'extrémité, 31 des deux bras voisins du maillon adjacent amont et assurant un bon écartement des bras d'une même rangée.

Les bords d'attaque avant 33 des bras et 38 des avant-bras respectivement de deux maillons adjacents assurent simultanément le filtrage, sans canal d'accélération antérieur.

En outre, l'alignement des bords d'attaque des bras et des avant-bras permet un bon nettoyage de l'ensemble de ces bords par une brosse rotative, par exemple.

Pour le reste, il n'y a pas de différence entre les bras et avant-bras et donc entre les chaînes de filtrage respectivement de l'art antérieur et de l'invention.

## Revendications

1. Chaîne sans fin de dégrillage, dont chaque maillon (39, 40) est constitué d'une rangée de bras de filtrage (30) montés tourillonnants sur deux axes amont (14) et aval (13) décalés le long de la chaîne, chaque bras de filtrage présentant un bord d'attaque avant (33) et étant prolongé par un avant-bras amont (35) présentant un bord d'attaque (38) , les avant-bras (35) d'un maillon (39) étant intercalés entre les bras (30) du maillon adjacent amont (40) et montés tourillonnants sur l'axe aval (14) dudit maillon adjacent, caractérisée par le fait que le bord d'attaque (38) de l'avant-bras (35) de chaque bras de filtrage (30) est sensiblement dans le prolongement rectiligne du bord d'attaque (33) des bras (30).

2. Bras de filtrage pour la chaîne sans fin de dégrillage de la revendication 1, s'étendant entre deux oeillets (31, 32) de passage d'axe (13, 14), présentant un bord d'attaque (33) et prolongé, au-delà d'un (32) des deux oeillets, par un avant-bras (35), caractérisé par le fait que l'avant-bras (35) présente un bord d'attaque (38) sensiblement dans le prolongement rectiligne du bord d'attaque (33) du bras (30).

3. Bras de filtrage selon la revendication 2, dans lequel l'avant-bras (35) est prolongé par un doigt de relevage (36).

4. Bras de filtrage selon l'une des revendications 2 et 3, dans lequel l'avant-bras (35) comporte un secteur de guidage (37).

5. Bras de filtrage selon l'une des revendications 2 à 4, dans lequel l'oeillet (32), au-delà duquel s'étend l'avant-bras (35), comporte des oreilles (42, 43) d'écartement et de réception d'un oeillet d'extrémité (31) d'un autre bras.

6. Bras de filtrage selon l'une des revendications 2 à 5, portant des entretoises (41) d'appui contre les avant-bras d'autres bras.

## Patentansprüche

1. Endlosketten-Rechenreiniger, wobei jedes seiner Kettenglieder (39, 40) von einem Satz von Filterarmen (30) gebildet wird, die auf zwei entlang der Kette im Abstand zueinander angeordneten Achsen, und zwar einer stromauf gelegenen Achse (14) und einer stromab gelegenen Achse (13), drehbar gelagert sind, wobei ferner jeder Filterarm eine vordere Stirnkante (33) aufweist und durch einen stromauf gelegenen Vor-Arm (35) verlängert ist, der eine Stirnkante (38) aufweist, und wobei die Vor-Arme (35) des einen Kettengliedes (39) zwischen die Arme (30) des angrenzenden, stromauf gelegenen Kettengliedes (40) zwischengeschaltet und auf der stromab gelegenen Achse (14) besagten angrenzenden Kettengliedes (40) drehbar gelagert sind,
**dadurch gekennzeichnet,**
daß die Stirnkante (38) des Vor-Arms (35) jedes Filterarms (30) im wesentlichen auf der geradlinigen Verlängerung der Stirnkante (33) der Arme (30) liegt.

2. Filterarm für den Endlosketten-Rechenreiniger nach Anspruch 1, wobei sich der Filterarm zwischen zwei Augen (31, 32) für den Durchtritt von Achsen (13, 14) erstreckt und wobei der Filterarm eine Stirnkante (33) aufweist und über eines (32) der beiden Augen hinaus durch einen Vor-Arm (35) verlängert ist,
**dadurch gekennzeichnet,**
daß der Vor-Arm (35) eine Stirnkante (38) aufweist, die im wesentlichen auf der geradlinigen Verlängerung der Stirnkante (33) der Arme (30) liegt.

3. Filterarm nach Anspruch 2, wobei der Vor-Arm (35) durch einen Anhebe-Finger (36) verlängert ist.

4. Filterarm nach Anspruch 2 oder 3, wobei der Vor-Arm (35) einen Führungsabschnitt (37) trägt.

5. Filterarm nach einem der Ansprüche 2 bis 4, wobei das Auge (32), über das sich der Vor-Arm (35) hinaus erstreckt, Ansätze (42, 43) zum Beabstanden und zur Aufnahme eines Auges des Endes (31) eines anderen Arms trägt.

6. Filterarm nach einem der Ansprüche 2 bis 5, wobei der Filterarm Stege (41) zum Abstützen gegen die Vor-Arme anderer Arme trägt.

## Claims

1. Endless chain screen cleaner, whereof each link (39, 40) is constituted by a row of filtering arms (30) mounted to swivel on an upstream pin (14) and a downstream pin (13) staggered along the chain, each filtering arm comprising a front leading edge (33) and being extended by an upstream fore-arm (35) comprising a leading edge (38), the fore-arms (35) of a link (39) being interposed between the arms (30) of the adjacent upstream link (40) and mounted to swivel on the downstream pin (14) of said adjacent link, characterised by the fact that the leading edge (38) of the fore-arm (35) of each filtering arm (30) is substantially in the rectilinear extension of the leading edge (33) of the arms (30).

2. Filtering arm for the endless chain screen cleaner of Claim 1, extending between two eyelets (31, 32) for the passage of the pin (13, 14), comprising a leading edge (33) and extended, beyond one (32) of the two eyelets, by a fore-arm (35), characterised by the fact that the fore-arm (35) has a leading edge (38) substantially in the rectilinear extension of the leading edge (33) of the arm (30).

3. Filtering arm according to Claim 2, in which the fore-arm (35) is extended by a lifting finger (36).

4. Filtering arm according to one of Claims 2 and 3, in which the fore-arm (35) comprises a guide sector (37).

5. Filtering arm according to one of Claims 2 to 4, in which the eyelet (32), beyond which the fore-arm (35) extends, comprises ears (42, 43) for separation and for receiving a terminal eyelet (31) of another arm.

6. Filtering arm according to one of Claims 2 to 5, supporting spacer members (41) for bearing against the fore-arms of other arms.
